# FASCICULE DE BREVET EUROPEEN

(11) **EP 2 303 692 B1**
(45) Date de publication et mention de la délivrance du brevet: **20.11.2013**
(21) Numéro de dépôt: 09802560.4
(22) Date de dépôt: 30.07.2009
(51) Int. Cl.: B64D 11/06

(54) **MODULE DE SIEGE POUR PASSAGER D'UN AERONEF**
SITZMODUL FÜR EINEN FLUGZEUGPASSAGIER
SEAT MODULE FOR AIRCRAFT PASSENGER

(30) Priorité: 01.08.2008 FR 0855367
(43) Date de publication de la demande: 06.04.2011
(73) Titulaire: Airbus, 31700 Blagnac (FR)
(72) Inventeur: COLLINS, Alexandra, CH-1204 Geneve (CH); COLLINS, Mark, CH-1204 Geneve (CH)
(74) Mandataire: Stankoff, Hélène
(86) Numéro de dépôt international: PCT/FR2009/000959
(87) Numéro de publication internationale: WO 2010/012910

(56) Documents cités:
- EP-A- 1 602 526
- WO-A-2007/061381
- WO-A1-2005/014395
- FR-A- 2 904 805

## Description

La présente invention concerne un module de siège pour passager d'un aéronef et un panneau de séparation d'un tel module.

Elle concerne également un aéronef comprenant au moins un tel module de siège.

Sur les vols commerciaux d'aéronef, particulièrement dans les classes dites supérieures (première classe, classe "affaire", ...), les passagers font l'objet d'attention particulière de la part des constructeurs d'aéronef.

En particulier, les passagers des classes supérieures ont souvent la possibilité d'incliner leur siège dans une position sensiblement horizontale, afin de transformer leur fauteuil en lit.

Afin d'isoler les passagers les uns des autres et de préserver une certaine intimité entre les passagers, il est connu, dans le document FR 2 904 805, de proposer un module de siège dans lequel un panneau de séparation s'étend le long d'au moins un côté du siège afin de masquer le passager occupant le siège aux yeux des autres passagers de la même cabine d'aéronef.

Dans un tel module de siège, le passager peut être soit assis dans le siège, celui-ci étant dans une position droite et le dossier du siège s'étendant dans un plan vertical comme le panneau de séparation, soit dans une position allongée, le siège ayant été transformé en lit et le dossier du siège s'étendant alors sensiblement à l'horizontal, dans un plan sensiblement perpendiculaire au panneau de séparation.

Le passager peut ainsi changer de position lors d'un voyage dans l'aéronef, en alternant la position du siège.

Toutefois, pour passer d'une position à une autre, le passager doit à chaque fois manoeuvrer le siège pour passer de la position droite du siège à la position allongée, et vice versa.

On connait aussi le document WO 2005/014395 qui est consideré comme l'état de la technique le plus proche et qui décrit un siege d'aéronef apte à passer d'une position assise à une position allongée, mais ne permettant pas de conférer un isolement au passager qu'il reçoit.

La présente invention a pour but de résoudre les inconvénients précités et de proposer un module de siège plus convivial, permettant au passager de changer de position sans manoeuvrer nécessairement le siège.

A cet effet, la présente invention concerne un module de siège pour passager d'un aéronef, comportant un siège comprenant une assise et un dossier mobile, et un panneau de séparation s'étendant le long d'au moins un côté du siège pour isoler le passager, le siège étant mobile entre une position droite, dans laquelle le dossier mobile du siège s'étend sensiblement verticalement et une position allongée, dans laquelle le dossier mobile s'étend dans un plan sensiblement perpendiculaire au panneau de séparation. Le panneau de séparation comprend une portion arrière s'étendant derrière le dossier mobile du siège dans la position droite, une garniture s'étendant au moins sur la surface de la portion arrière du panneau de séparation, la portion arrière du panneau de séparation étant adaptée à former un dossier pour le passager dans la position allongée du siège, le dossier mobile dudit siège formant une assise dans ladite position allongée, et le panneau de séparation revêtu de la garniture formant un dossier pour le passager, un bord supérieur du dossier et la portion arrière du panneau de séparation présentant des formes complémentaires de sorte que le bord supérieur est adapté à venir sensiblement en contact avec la portion arrière du panneau de séparation, lorsque le dossier est en position horizontale.

Ainsi, le panneau de séparation revêtu d'une garniture permet de reconstituer un dossier de siège lorsque le siège du module est en position allongée, permettant au passager de s'appuyer confortablement contre ce panneau de séparation.

Grâce à l'invention, le module de siège offre trois positions de repos au passager, une première position assise dans le siège en position droite et une position allongée et une seconde position assise lorsque le siège est en position allongée.

On notera en particulier que lorsque le siège a été manoeuvré en position allongée, le passager peut alterner de la position allongée à la position assise, sans avoir à manoeuvrer à chaque fois le siège.

Avantageusement, la garniture s'étend sur l'intégralité de la surface de la portion arrière du panneau de séparation, pour offrir une large surface d'appui au passager assis lorsque le siège est en position allongée.

De préférence, le panneau de séparation forme une coque autour du siège, comprenant en outre deux portions latérales s'étendant respectivement le long des deux côtés de l'assise du siège dans la position droite.

Ce type de panneau de séparation permet d'isoler parfaitement le passager de son environnement dans la cabine de l'aéronef.

En outre, la garniture s'étend également sur la surface des portions latérales du panneau de séparation pour offrir un maximum de confort au passager.

Selon un second aspect, la présente invention concerne également un panneau de séparation associé à un siège pour passager d'un aéronef, ledit siège étant mobile entre une position droite et une position allongée.

Selon l'invention, le panneau de séparation est revêtu, sur une surface d'une portion arrière adaptée à s'étendre derrière le dossier mobile du siège dans la position droite, d'une garniture adaptée à former une surface d'appui constituant un dossier pour le passager dans la position allongée du siège.

Selon un troisième aspect, la présente invention concerne également un aéronef comprenant au moins un module de siège tel que décrit précédemment.

Ce panneau de séparation et cet aéronef présentent des caractéristiques et avantages analogues à ceux décrits précédemment en relation avec le module de siège.

D'autres particularités et avantages de l'invention apparaîtront encore dans la description ci-après.

Aux dessins annexés, donnés à titre d'exemples non limitatifs :
- la figure 1 est une vue de dessus schématique d'un ensemble de modules de siège équipant une cabine d'un aéronef ;
- la figure 2A illustre un module de siège en vue de dessus conforme à un mode de réalisation de l'invention, le siège étant en position droite ;
- la figure 2B est une vue analogue à la figure 2A, le siège étant en position allongée ;
- la figure 3 est une vue en perspective d'un module de siège conforme à un mode de réalisation de l'invention, illustrant une première position du passager occupant un tel module de siège ; et
- la figure 4 est une vue analogue à la figure 3 illustrant deux autres positions du passager dans le module de siège conforme à l'invention.

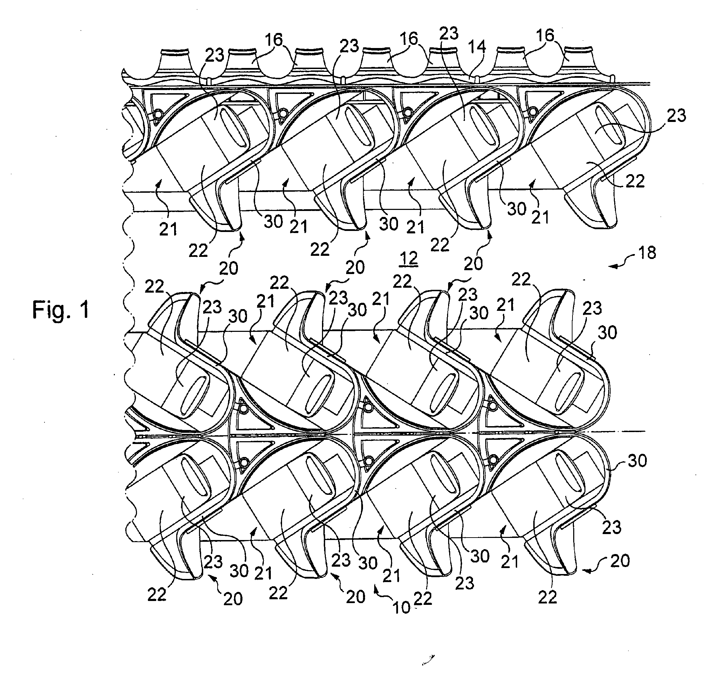

On va décrire tout d'abord en référence à la figure 1, un aménagement de cabine d'aéronef conforme à un mode de réalisation de l'invention.

Comme représenté partiellement à la figure 1, une cabine 10 d'aéronef comporte un plancher 12, des parois latérales, dont une seule 14 pourvue de hublots 16 est représentée, ainsi qu'un plafond, non représenté, pour des raisons de clarté.

La cabine comporte plusieurs modules de siège désignés par la référence générale 20 permettant de créer une place pour chaque passager de l'aéronef.

Chaque module 20 comporte un siège 21 et un panneau de séparation 30.

Comme bien illustré à la figure 1, différents modules de siège pour passager sont implantés, à savoir des modules 20 disposés le long de la paroi 14 de la cabine et des modules 20 disposés en partie centrale de la cabine. Dans cette partie centrale, les modules de siège 20 sont par exemple implantés par paires.

Entre la partie centrale de la cabine et la paroi 14 de la cabine, les modules de siège 20 sont placés de part et d'autre d'une allée 18, prévue dans la cabine pour la circulation des passagers et du personnel de bord.

Par ailleurs, comme bien illustré à la figure 1, les modules de siège 20 sont agencés en quinconce, les uns par rapport aux autres, de part et d'autre de l'allée 18. Cet agencement permet d'augmenter l'effet de masquage produit par les panneaux de séparation 30 comme cela sera décrit ci-dessous.

Dans chaque module de siège 20, le siège 21 lui-même comporte une assise 22 et un dossier 23 permettant de manière classique au passager d'être assis dans le siège 21.

A la figure 1, chaque siège est dans une position droite, le dossier 23 du siège 21 s'étendant ainsi sensiblement verticalement par rapport notamment au plancher 12 de l'aéronef.

Bien entendu, cette position droite du siège 21 englobe également les positions intermédiaires du siège dans lesquelles le dossier 23 est légèrement incliné par rapport à l'assise 22, par exemple d'un angle de 20 à 30° par rapport à la verticale.

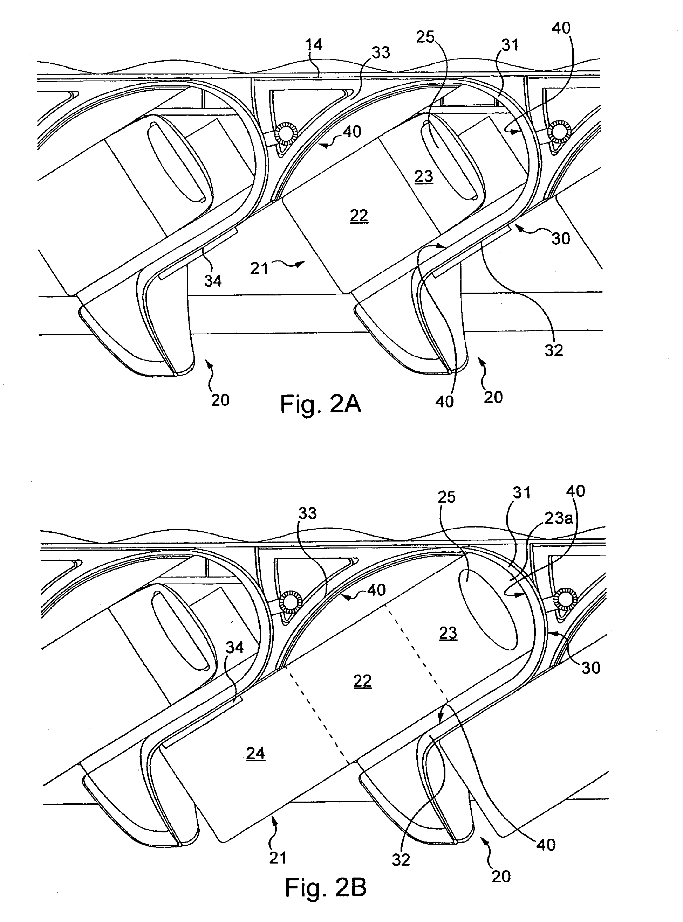

Les figures 2A et 2B illustrent plus en détails un module de siège 20, chaque siège 21 étant mobile entre une position droite (figure 2A) et une position allongée (figure 2B).

Le mécanisme permettant au siège 21 de passer de la position droite à la position allongée, et vice versa, n'est pas illustré sur les figures. Ce mécanisme peut être un mécanisme quelconque, bien connu de l'homme du métier, permettant de modifier la position du siège.

En particulier, dans la position allongée, le dossier 23 du siège 21 s'étend dans une position sensiblement horizontale, sensiblement dans le même plan que l'assise 22 du siège.

Comme bien illustré sur les figures 2A et 2B, le dossier 23 comporte de préférence un appui-tête 25 constituant, lorsque le siège est en position allongée, un coussin pour la tête du passager allongé sur le siège 21.

Le siège 21 en position allongée, tel qu'illustré à la figure 2B, constitue ainsi un lit pour le passager.

Afin d'augmenter la longueur de ce lit, le siège 21 peut en outre comporter une aile 24 dans le prolongement de l'assise 22, adaptée à se déplacer entre une position repliée, sensiblement verticalement, lorsque le siège 21 est en position droite, et une position allongée, sensiblement dans le même plan horizontal que l'assise 22 et le dossier 23 du siège 21 lorsque ce dernier est en position allongée.

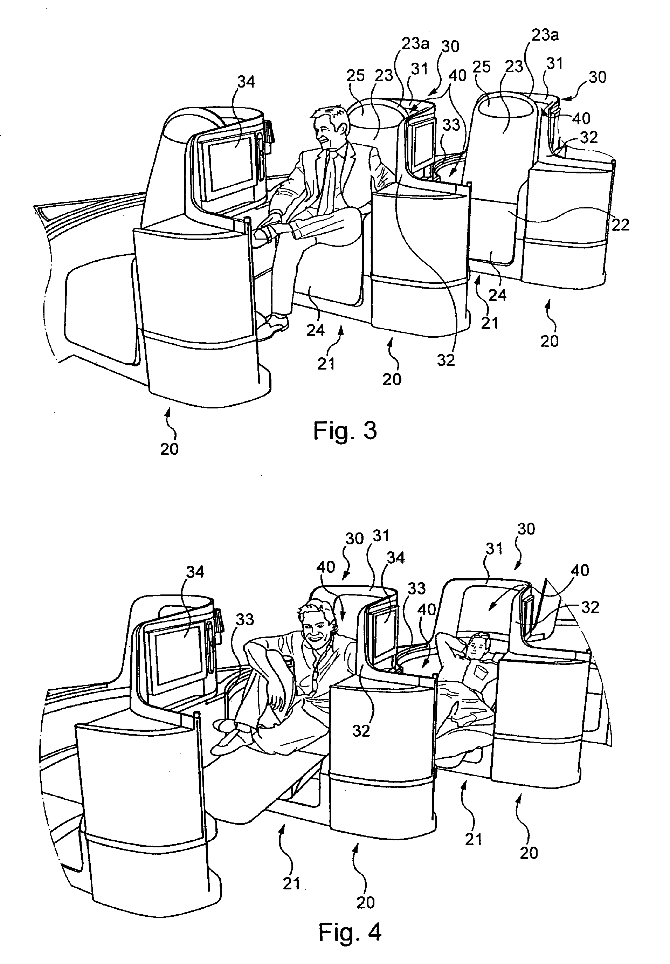

Comme bien illustré sur les figures 3 et 4, chaque panneau de séparation 30 s'étend au moins le long d'un côté du siège 21, de manière à dissimuler, totalement ou partiellement, un passager occupant le siège 21.

Chaque panneau de séparation 30 est ainsi non transparent et de préférence réalisé en matière plastique moulée ou en matériau composite thermoformé.

Dans ce mode de réalisation préféré, chaque panneau de séparation 30 forme une coque s'étendant autour du siège 21, et en particulier le long des deux côtés de l'assise 22 et derrière le dossier 23 du siège 21, lorsque celui-ci est en position droite.

Le panneau de séparation 30 présente ainsi une surface dirigée vers le siège 21 qui présente une courbure avec une concavité dirigée vers le siège.

Comme bien illustré sur la vue de dessus des figures 2A et 2B, le panneau de séparation 30 présente sensiblement une forme semi circulaire autour du siège 21.

Afin de préserver l'intimité du passager assis ou allongé dans le siège 21, ce panneau de séparation 30 présente, au moins sur une partie de son pourtour, une hauteur suffisante pour masquer le passager assis ou allongé dans le siège 21.

Dans ce mode de réalisation, le panneau de séparation 30 présente une portion arrière 31, destinée à s'étendre derrière le dossier 23 du siège 21 lorsque ce dossier 22 est en position sensiblement verticale, de grande hauteur et par exemple, à titre d'exemple non limitatif, d'une hauteur de 1 m30.

Une des portions latérales 32 s'étendant le long d'un côté de l'assise 22, et dans l'exemple des figures 3 et 4, sur la gauche du passager lorsque celui-ci est assis dans le siège 21, présente également une hauteur suffisante, du même ordre de grandeur que celle décrite précédemment pour la portion arrière 31 du panneau de séparation 30.

Cette première portion latérale 32 et la portion arrière 31 du panneau de séparation 30 sont destinées à séparer le siège 21 des sièges adjacents, ici disposés en alignement, le long de la paroi 14 de l'aéronef.

La première portion latérale 32 est également destinée à masquer le passager des occupants des sièges de l'autre côté de l'allée 18 de la cabine.

Comme expliqué précédemment, la disposition en quinconce des sièges de part et d'autre de cette allée 18 favorise encore l'intimité de chaque passager, isolé par la paroi de séparation 30, et notamment par la première portion latérale 32.

A titre purement illustratif, cette première portion latérale 32 peut comporter sur sa surface extérieure, opposée au siège 21 du module de siège considéré, un écran 34 orienté à destination d'un passager d'un module de siège adjacent, placé à l'arrière du module de siège considéré.

Finalement, le panneau de séparation 30 comporte une seconde portion latérale 33, destinée, dans l'exemple de réalisation illustré sur les figures 3 et 4, à être disposée à droite du passager lorsque celui-ci est assis dans le siège 21.

Dans ce mode de réalisation, cette seconde portion latérale 33 du panneau de séparation 30 est de hauteur plus faible, et par exemple d'environ 80cm, formant un accoudoir et/ou une tablette pour le passager du siège 21.

Comme bien illustré aux figures 3 et 4, le passager peut occuper une position assise, illustrée à la figure 3, et une position allongée, illustrée à la figure 4, sur le module de siège 20 à droite de cette figure.

Par ailleurs, le panneau de séparation 30 est revêtu, sur au moins une portion de surface dirigée vers le siège 21, d'une garniture 40 adaptée à former une surface d'appui pour le passager.

Ainsi, comme bien illustré à la figure 4, lorsque le siège 21 est en position allongée, le passager peut s'appuyer confortablement contre le panneau de séparation 30 revêtu d'une garniture 40 (voir module de siège à gauche de la figure 4).

Ainsi, dans la position allongée, le dossier 23 du siège 21 forme une assise et le panneau de séparation 30 revêtu de la garniture 40 forme un dossier pour le passager.

Comme bien illustré sur le figures 2A et 2B, la disposition du siège 21 dans le module de siège, et son positionnement par rapport au panneau de séparation 30 permet, lorsque le siège 21 est en position allongée, d'obtenir un positionnement du dossier 23 du siège 21 sensiblement perpendiculaire au panneau de séparation 30.

Comme bien illustré à la figure 2B, un bord supérieur 23a du dossier 23 du siège 21 est adapté à venir en position sensiblement adjacente au panneau de séparation 30.

Dans ce mode de réalisation, le bord supérieur 23a du dossier 23 du siège 21 est adapté à venir sensiblement en contact avec la portion arrière 31 du panneau de séparation 30, lorsque le dossier 23 est en position horizontale.

Ainsi, ce bord supérieur 23a du dossier 23 et la portion arrière 31 du panneau de séparation 30 présentent des formes complémentaires.

Ici, le contour en arc de cercle du bord supérieur 23a du dossier 23 correspond sensiblement à la forme concave de la portion arrière 31 du panneau de séparation 30.

Cette portion arrière 31 du panneau de séparation 30 présente une portion de surface, revêtue de la garniture 40, dont la concavité est dirigée vers le siège 21, et plus particulièrement autour du bord supérieur 23a du dossier 23 du siège 21 en position allongée.

Comme bien illustré à la figure 4, la garniture 40 s'étend sur la surface de la portion arrière 31 du panneau de séparation 30, et de préférence sur l'intégralité de cette surface.

De préférence, cette garniture 40 s'étend également sur les portions de surface concaves des portions latérales 32, 33 du panneau de séparation 30, dirigées en regard des côtés de l'assise 22 du siège 21.

Afin d'assurer un appui confortable au passager, cette garniture 40 de panneau de séparation 30 peut être constituée d'un revêtement rembourré, du type coussin, de faible épaisseur. A titre indicatif, ce revêtement peut avoir une épaisseur comprise entre 1 et 5 cm, et de préférence entre 2 et 3 cm.

Cette garniture 40 est par exemple constituée d'un revêtement composite, comprenant une couche interne destinée à être fixée, par exemple par collage, contre la surface du panneau de séparation 30. Cette couche interne peut présenter une certaine épaisseur et élasticité. Typiquement, cette couche interne peut être une mousse en matière plastique.

Une couche externe, maintenue par exemple par piquage sur la couche interne, peut être réalisée en textile, tissé ou non tissé, en un matériau adapté à assurer le confort du passager s'appuyant contre le panneau de séparation 30.

De préférence, la garniture 40 est réalisée dans un matériau résistant au feu.

Grâce à l'invention, le panneau de séparation 30 présente, outre sa fonction de séparation et d'isolement du passager, une fonction de dossier complémentaire, permettant au passager d'occuper une position assise confortable, même lorsque le siège 21 est en position allongée.

Ce panneau de séparation 30 de forme semi circulaire, entourant le siège 21 et revêtu d'une garniture 40, forme ainsi une alcôve autour du siège 21.

Bien entendu de nombreuses modifications peuvent être apportées aux exemples de réalisation décrits précédemment sans sortir du cadre de l'invention.

En particulier, la disposition de la garniture 40 sur le panneau de séparation 30, et notamment sur les surfaces destinées à venir autour du siège 21 lorsque celui-ci est en position allongée, n'est nullement limitative.

Par ailleurs, l'épaisseur de la garniture 40 peut être variable suivant les différentes portions de surface du panneau de séparation 30. En particulier, l'épaisseur de cette garniture peut être supérieure sur la portion arrière 31 du panneau de séparation 30, contre laquelle le passager est naturellement conduit à s'appuyer lorsqu'il souhaite être en position assise sur le siège en position allongée. En revanche, afin de diminuer les coûts de matière et le poids du module, la garniture fixée sur les portions latérales 32, 33 du panneau de séparation 30 peut être de moindre épaisseur.

## Revendications

1. Module de siège pour passager d'un aéronef, comportant un siège (21) comprenant une assise (22) et un dossier mobile (23), et un panneau de séparation (30) s'étendant le long d'au moins un côté dudit siège (21) pour isoler le passager, ledit siège (21) étant mobile entre une position droite, dans laquelle le dossier mobile (23) du siège s'étend sensiblement verticalement et une position allongée, dans laquelle ledit dossier mobile (23) s'étend dans un plan sensiblement perpendiculaire audit panneau de séparation (30), **caractérisé en ce que** ledit panneau de séparation (30) comprend une portion arrière (31) s'étendant derrière le dossier mobile (23) du siège (21) dans ladite position droite, une garniture (40) s'étendant au moins sur la surface de ladite portion arrière (31) du panneau de séparation (30), ladite portion arrière (31) du panneau de séparation (30) étant adaptée à former un dossier pour le passager dans ladite position allongée du siège (21), le dossier mobile (23) dudit siège (21) formant une assise dans ladite position allongée, et le panneau de séparation (30) revêtu de la garniture (40) formant un dossier pour le passager, un bord supérieur (23a) du dossier (23) et la portion arrière (31) du panneau de séparation (30) présentant des formes complémentaires de sorte que le bord supérieur (23a) est adapté à venir sensiblement en contact avec la portion arrière (31) du panneau de séparation (30), lorsque le dossier (23) est en position horizontale.

2. Module de siège conforme à la revendication 1, **caractérisé en ce que** ladite garniture (40) s'étend sur l'intégralité de la surface de la portion arrière (31) du panneau de séparation (30).

3. Module de siège conforme à l'une des revendications 1 ou 2, **caractérisé en ce que** ledit panneau de séparation (30) forme une coque autour du siège, comprenant en outre deux portions latérales (32, 33) s'étendant respectivement le long des deux côtés de l'assise (22).

4. Module de siège conforme à la revendication 3, **caractérisé en ce que** ladite garniture (40) s'étend en outre sur la surface desdites portions latérales (32, 33) du panneau de séparation (30).

5. Module de siège conforme à l'une des revendications 1 à 4, **caractérisé en ce que** ladite portion arrière (31) du panneau de séparation (30) présente une courbure ayant une concavité dirigée vers ledit siège (21).

6. Module de siège conforme à l'une des revendications 1 à 5, **caractérisé en ce que** la garniture (40) est un revêtement composite.

7. Module de siège conforme à l'une des revendications 1 à 6, **caractérisé en ce que** la garniture (40) comprend une couche interne en mousse de matière plastique et une couche externe en textile.

8. Panneau de séparation associé à un siège (21) pour passager d'un aéronef pour un module de siège selon l'une quelconque des revendications 1 à 7, ledit siège (21) étant mobile entre une position droite et une position allongée, **caractérisé en ce que** ledit panneau de séparation (30) est revêtu, sur une surface d'une portion arrière adaptée à s'étendre derrière le dossier mobile (23) du siège (21) dans ladite position droite, d'une garniture (40) adaptée à former une surface d'appui constituant un dossier pour le passager dans ladite position allongée du siège (21).

9. Aéronef, **caractérisé en ce qu'**il comprend au moins un module de siège conforme à l'une des revendications 1 à 7.

## Patentansprüche

1. Sitzmodul für Passagiere eines Luftfahrzeugs, umfassend einen Sitz (21) mit einer Sitzfläche (22) und einer beweglichen Rückenlehne (23), und eine Trennplatte (30), die sich entlang zumindest einer Seite des Sitzes (21) erstreckt, um den Passagier abzusondern, wobei der Sitz (21) zwischen einer geraden Stellung, in welcher die bewegliche Rückenlehne (23) des Sitzes sich im Wesentlichen vertikal erstreckt, und einer langgestreckten Stellung beweglich ist, in welcher die bewegliche Rückenlehne (23) sich in einer im Wesentlichen senkrecht zur Trennplatte (30) verlaufenden Ebene erstreckt, **dadurch gekennzeichnet, dass** die Trennplatte (30) einen hinteren Abschnitt (31) aufweist, der sich hinter der beweglichen Rückenlehne (23) des Sitzes (21) in der geraden Stellung erstreckt, einen Belag (40) der sich zumindest auf der Oberfläche des hinteren Abschnitts (31) der Trennplatte (30) erstreckt, wobei der hintere Abschnitt (31) der Trennplatte (30) dazu ausgelegt ist, in der langgestreckten Stellung des Sitzes (21) eine Rückenlehne für den Passagier zu bilden, wobei die bewegliche Rückenlehne (23) des Sitzes (21) in der langegestreckten Stellung eine Sitzfläche bildet und die mit dem Belag (40) überzogene Trennplatte (30) eine Rückenlehne für den Passagier bildet, wobei ein oberer Rand (23a) der Rückenlehne und der hintere Abschnitt (31) der Trennwand (30) komplementäre Formen aufweisen, so dass der obere Rand (23a) dazu ausgelegt ist, im Wesentlichen dann in Kontakt mit dem hinteren Abschnitt (31) der Trennplatte (30) zu gelangen, wenn die Rückenlehne (23) in horizontaler Stellung ist.

2. Sitzmodul nach Anspruch 1, **dadurch gekennzeichnet, dass** der Belag (40) sich über die gesamte Oberfläche des hinteren Abschnitts (31) der Trennplatte (30) erstreckt.

3. Sitzmodul nach einem der Ansprüche 1 oder 2, **dadurch gekennzeichnet, dass** die Trennplatte (30) eine Schale um den Sitz herum bildet, die ferner zwei seitliche Abschnitte (32, 33) aufweist, die sich entlang der beiden jeweiligen Seiten der Sitzfläche (22) erstrecken.

4. Sitzmodul nach Anspruch 3, **dadurch gekennzeichnet, dass** der Belag (40) sich ferner über die Oberfläche der seitlichen Abschnitte (32, 33) der Trennplatte (30) erstreckt.

5. Sitzmodul nach einem der Ansprüche 1 bis 4, **dadurch gekennzeichnet, dass** der hintere Abschnitt (31) der Trennplatte (30) eine Krümmung mit einer zum Sitz (21) gerichteten Konkavität aufweist.

6. Sitzmodul nach einem der Ansprüche 1 bis 5, **dadurch gekennzeichnet, dass** der Belag (40) eine Verbundverkleidung ist.

7. Sitzmodul nach einem der Ansprüche 1 bis 6, **dadurch gekennzeichnet, dass** der Belag (40) eine Innenschicht aus einem Schaumstoff aus Kunststoff und eine Außenschicht aus Textilstoff aufweist.

8. Trennwand, die einem Sitz (21) für Passagiere eines Luftfahrzeugs für ein Sitzmodul nach einem der Ansprüche 1 bis 7 zugeordnet ist, wobei der Sitz (21) zwischen einer geraden Stellung und einer langgestreckten Stellung beweglich ist, **dadurch gekennzeichnet, dass** die Trennwand (30) auf der Oberfläche eines hinteren Abschnitts, der dazu ausgelegt ist, sich hinter der beweglichen Rückenlehne (23) des Sitzes (21) in der geraden Stellung zu erstrecken, mit einem Belag (40) überzogen ist, der dazu ausgelegt ist, eine Abstützfläche zu bilden, die für den Passagier in der langgestreckten Stellung des Sitzes (21) eine Rückenlehne bildet.

9. Luftfahrzeug, **dadurch gekennzeichnet, dass** es zumindest ein Sitzmodul nach einem der Ansprüche 1 bis 7 aufweist.

## Claims

1. Seat module for an aircraft passenger, comprising a seat (21) consisting of a sitting surface (22) and a movable back (23), and a separation panel (30) extending along at least one side of the said seat (21), in order to isolate the passenger, the said seat (21) being movable between an upright position, in which the movable back (23) of the seat extends substantially vertically and an extended position, in which the said movable back (23) extends in a plane substantially perpendicular to the said separation panel (30), **characterized in that** the said separation panel (30) comprises a rear portion (31) extending behind the movable back (23) of the seat (21) in the said upright position, a covering (40) extending at least over the surface of the said rear portion (31) of the separation panel (30), the said rear portion (31) of the separation panel (30) being adapted to form a back for the passenger in the said extended position of the seat (21), the movable back (23) of the said seat (21) forming a seating surface in the said extended position, and the separation panel (30) lined with the covering (40) forming a back for the passenger, an upper edge (23a) of the back (23) and the rear portion (31) of the separation panel (30) having complementary forms so that the upper edge (23a) is adapted to substantially be in contact with the rear portion (31) of the separation panel (30) when the back (23) is in the horizontal position.

2. Seat module according to claim 1, **characterized in that** the said covering (40) extends over the entire surface of the rear portion (31) of the separation panel (30).

3. Seat module according to one of claims 1 or 2, **characterized in that** the said separation panel (30) forms a shell around the seat, further comprising two side portions (32, 33) extending respectively along the two sides of the sitting surface (22).

4. Seat module according to claim 3, **characterized in that** the said covering (40) further extends over the surface of the said side portions (32, 33) of the separation panel (30).

5. Seat module according to one of claims 1 to 4, **characterized in that** the said rear portion (31) of the separation panel (30) has a curvature having a concavity directed toward the said seat (21).

6. Seat module according to one of claims 1 to 5, **characterized in that** the covering (40) is a composite upholstering.

7. Seat module according to one of claims 1 to 6, **characterized in that** the covering (40) comprises an inner layer made of plastic foam and an outer layer made of textile.

8. Separation panel associated with a seat (21) for an aircraft passenger, for a seat module according to any one of claims 1 to 7, the said seat (21) being movable between an upright position and an extended position, **characterized in that** the said separation panel (30) is provided, over a surface of a rear portion adapted for extending behind the back (23) of the seat (21) in the said upright position, with a covering (40) adapted for forming a support surface constituting a back for the passenger in the said extended position of the seat (21).

9. Aircraft, **characterized in that** it comprises at least one seat module according to one of claims 1 to 7.
